# NEW EUROPEAN PATENT SPECIFICATION

(11) **EP 0 954 962 B2**
(45) Date of publication and mention of the opposition decision: **09.12.2009**
(45) Mention of the grant of the patent: 02.07.2003
(21) Application number: 99201331.8
(22) Date of filing: 29.04.1999
(51) Int. Cl.: A01J 5/007

(54) **A method of and an implement for automatically milking animals**
Verfahren und Vorrichtung zum automatischen Melken von Tieren
Procédé et dispositif de traite automatique d'animaux

(30) Priority: 01.05.1998 NL 1009052
(43) Date of publication of application: 10.11.1999
(73) Proprietor: MAASLAND N.V., 3155 PD Maasland (NL)
(72) Inventor: van den Berg, Karel, 2971 BR Bleskensgraaf (NL)
(74) Representative: Corten, Maurice Jean F.M.

(56) References cited:
- EP-A- 0 727 137
- WO-A-95/31096
- WO-A-96/36213
- DE-A- 3 609 275
- US-A- 3 754 532
- US-A- 4 011 838
- US-A- 4 011 838
- WERNER L. SCHMIDT: 'Entwicklung einer Melk-Mess-Einrichtung zur Erfassung von Milchabgabeprofilen innerhalb der Pulszyklen bei abgestuften Druckverhältnissen', 1986, ARBEITSKREIS FORSCHUNG UND LEHRE DER MAX-EYTH-GESELLSCHAFT (MEG) pages 1-11,18 - 215

## Description

The invention relates to a method of automatically milking animals, according to the preamble of claim 1.

Such a method is known from EP-A-0 727 137.

The invention aims at providing an alternative method.

In accordance with the invention this is achieved in that the method comprises the features as specified in the characterizing part of claim 1.

The above-mentioned method has the advantage of preventing the teat from being exposed for a too long period of time to the milk vacuum when the momentary pulse milk flow decreases. In this manner teat and/or udder damage is avoided.

According to an inventive feature, the method comprises the following steps:
- storage, during the actual suction phase, of the maximum value of the pulse milk flow measured thus far or the quantity related thereto,
- squeezing the liner of the teat cup as soon as the momentary value of the pulse milk flow or the quantity related thereto has come below a specific, preferably adjustable threshold value.

According to an inventive feature, the threshold value has a value between 60% and 80% of the maximum value of the pulse milk flow measured thus far or the quantity related thereto. In a preferred embodiment of the invention said value amounts to approximately 70%. According to again another aspect of the invention, for the purpose of avoiding teat and/or udder damage, the duration of the suction phase is limited to a value between 0.8 and 2 seconds and preferably amounts to approximately 1.4 second. According to an inventive feature, the time during which the teat is hardly exposed, if at all, to the vacuum during milking, i.e. the release phase, amounts to between 30% and 40% and preferably to approximately 35% of the duration of the suction phase.

In accordance with an aspect of the invention, the maximum duration of the release phase during the main milking stage amounts to between 175 and 225 milliseconds and preferably to 200 milliseconds. According to again another inventive feature, the maximum duration of the release phase during foremilking amounts to between 30 and 100 milliseconds and preferably to 40 milliseconds. According to an inventive feature, the maximum duration of the release phase during stripping amounts to between 225 and 800 milliseconds and preferably to 400 milliseconds.

According to again another inventive feature, the above-mentioned method is applied to each teat individually, so that teat and/or udder damage during milking is minimized.

The invention also relates to an implement for automatically milking animals as defined in claim 10. According to an aspect of the invention, the pulse milk flow sensor comprises a conductivity sensor. According to again another inventive feature, the pulse milk flow sensor may also be constituted by an optical and/or acoustical sensor. In a particular embodiment of the invention the sensor is constituted by a small microphone. In order to obtain an optimal control of the pulsator, according to a further inventive feature, the pulse milk flow sensor is disposed in the teat cup or in the milk line system at a place located as closely as possible to the teat. According to an inventive feature, the pulse milk flow sensor is disposed in the teat cup. In a preferred embodiment of the invention the pulse milk flow sensor is arranged in the pulse chamber, i.e. the space between the liner and the outer casing of the teat cup. According to again another embodiment of the invention, the pulse milk flow sensor is disposed in or on a part of a milk line of the teat cup that is closest to the teat cup.

In accordance with again another inventive feature, the implement comprises a milking robot for automatically connecting the teat cups to the teats of an animal to be milked.

The invention will now be explained in further detail with reference to the accompanying drawings, in which:
Figure 1 shows a teat cup in which a pulse milk flow sensor is disposed;
Figure 2 shows a diagram of the pulsation curve and a diagram of the pulse milk flow curve.

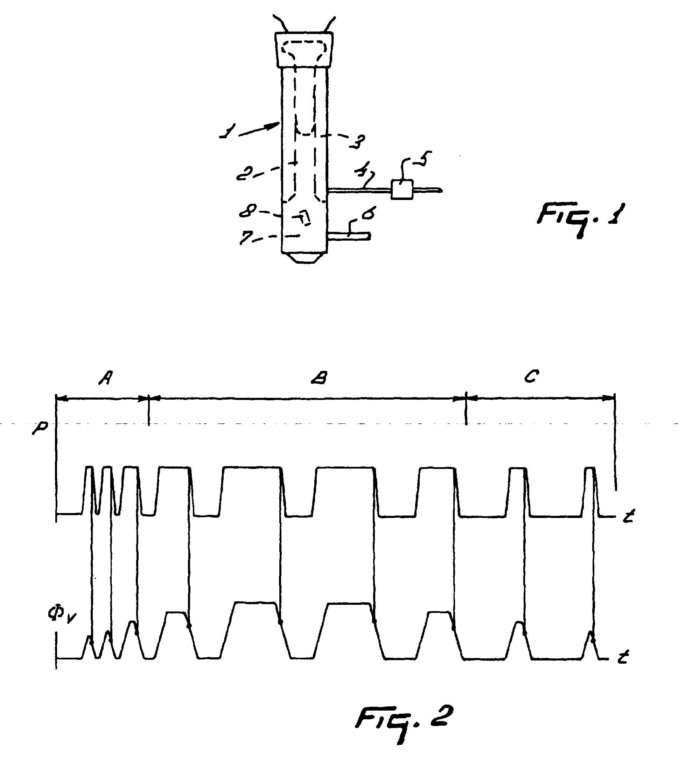

Figure 1 shows a teat cup 1 provided with a liner 2 and a pulse chamber 3. A pulse tube 4 is connected to the pulse chamber 3. A computer-controlled adjustable pulsator 5 is included in the pulse tube 4. Near the lower side of the teat cup 1 there is further arranged a milk line 6. In the lower part of the teat cup 1 a pulse milk flow sensor 8 is disposed in a milk collecting chamber 7. The pulse milk flow sensor 8 is connected to a computer or calculation unit via a (non-shown) line. In the present embodiment the pulse milk flow sensor comprises a microphone. With the aid of the computer and/or calculation unit the computer-controlled adjustable pulsator 5 can be controlled on the basis of the signal supplied by the pulse milk flow sensor 8. The control of the pulsator 5 will now be explained in further detail with reference to the diagrams of Figure 2.

The upper diagram of Figure 2 shows schematically the pulsation curve of the pulsator for one teat. The X-axis is the time axis and the Y-axis represents the vacuum level of the milk vacuum. The lower diagram shows the momentary pulse milk flow, the X-axis being the time axis and the Y-axis representing the volume flow of milk from a teat. As indicated in Figure 2, milking can be subdivided into three stages, i.e.:
A) the foremilking stage during which the relevant udder quarter is stimulated to secrete milk,
B) the main milking stage during which the udder quarter easily secretes milk, and
C) the stripping stage during which the "remaining milk" is milked from the udder quarter.

As already mentioned before, the present invention aims at avoiding that a vacuum continues to prevail for a too long period of time under the teat when the milk flow from the relevant udder quarter has stopped. With the aid of the pulse milk flow sensor it is possible to measure continuously the changes in the pulse milk flow (Figure 2). In the lower diagram the vertical lines indicate at what points of the various consecutive pulse milk flows the quantity measured deviates each time by a specific percentage from the maximum value of that quantity measured thus far. In the present embodiment said value amounts to 70% of the maximum value of the pulse milk flow measured thus far. As shown in the upper diagram, at that moment the pulsator is activated by means of the computer in such a manner that the milk vacuum level under the teat is lowered. During lowering the milk vacuum the milk remaining thus far is yielded from the relevant udder quarter without the teat remaining exposed to the maximum vacuum. In this manner teat and/or udder damage is avoided. As shown in the two diagrams, this phase is followed by a so-called release phase during which a proper blood circulation of the teat is possible. As shown in the diagrams, during foremilking the frequency of the pulsator is relatively high in relation to the main milking and stripping stages. The high pulsation frequency stimulates the relevant udder quarter to secrete milk.

## Claims

1. A method of automatically milking animals, comprising the following steps:
- measuring repeatedly or continuously the momentary pulse milk flow by pulse milk flow is meant the milk flow wherein from a teat during a single suction phase of the milking process;
- controlling the duration and/or the level of the milk vacuum under the teat during the actual suction phase on the basis of the measured quantity by suction phase is meant the time during which the teat is exposed to a vacuum during wherein the previously mentioned pulse milk flow, **characterized in that** this method comprises the following steps:
- storage, during the actual suction phase, of the maximum value of the pulse milk flow measured thus far or the quantity related thereto,
- lowering or reducing or closing off the vacuum level of the milk vacuum as soon as the momentary value of the pulse milk flow or the quantity related thereto has come below a specific, preferably adjustable threshold value, which threshold value has a value between 60% and 80% of the maximum value of the pulse milk flow measured thus far or the quantity related thereto.

2. A method as claimed in claim 1, **characterized in that** this method comprises the following steps:
- squeezing the liner of the teat cup as soon as the momentary value of the pulse milk flow or the quantity related thereto has come below the specific, preferably adjustable threshold value.

3. A method as claimed in claim 1, **characterized in that** the value amounts to approximately 70%.

4. A method as claimed in any one of the preceding claims, **characterized in that** the duration of the suction phase is limited to a value between 0.8 and 2 seconds and preferably amounts to approximately 1.4 second.

5. A method as claimed in any one of the preceding claims, **characterized in that** the time during which the teat is hardly exposed, if at all, to the vacuum during milking, i.e. the release phase, amounts to between 30% and 40% and preferably to approximately 35% of the duration of the suction phase.

6. A method as claimed in claim 5, **characterized in that** the maximum duration of the release phase during the main milking stage amounts to between 175 and 225 milliseconds and preferably to 200 milliseconds.

7. A method as claimed in any one of the preceding claims, **characterized in that** the maximum duration of the release phase during foremilking amounts to between 30 and 100 milliseconds and preferably to 40 milliseconds.

8. A method as claimed in any one of the preceding claims, **characterized in that** the maximum duration of the release phase during stripping amounts to between 225 and 800 milliseconds and preferably to 400 milliseconds.

9. A method as claimed in any one of the preceding claims, **characterized in that** the method is applied to each teat individually.

10. An implement for automatically milking animals, said implement comprising at least one adjustable pulsator (5), at least one pulse milk flow sensor (8), means for measuring repeatedly or continuously the momentary pulse milk flow by pulse milk flow is meant the milk flow wherein from a teat during a single suction phase of the milking process, and means for controlling the duration and/or the level of the milk vacuum under the teat during the actual suction phase on the basis of the measured quantity by suction phase is meant the time during which the teat is exposed to a vacuum during wherein the previously mentioned pulse milk flow, **characterized in that** the implement further comprises means for storing, during the actual suction phase, the maximum value of the pulse milk flow measured thus far or the quantity related thereto, and means for lowering or reducing or closing off the vacuum level of the milk vacuum as soon as the momentary value of the pulse milk flow or the quantity related thereto has come below a specific, preferably adjustable threshold value, which threshold value has a value between 60% and 80% of the maximum value of the pulse milk flow measured thus far or the quantity related thereto.

11. An implement as claimed in claim 10, **characterized in that** each of the teat cups (1) of the implement for automatically milking comprises an adjustable pulsator (5) and a pulse milk flow sensor (8).

12. An implement as claimed in claim 10 or 11, **characterized in that** the pulse milk flow sensor (8) comprises a conductivity sensor.

13. An implement as claimed in claim 10 or 11, **characterized in that** the pulse milk flow sensor (8) is constituted by an optical and/or acoustical sensor.

14. An implement as claimed in any one of claims 10 - 13, **characterized in that** the pulse milk flow sensor (8) is disposed in the teat cup (1) or in the milk line system (6) at a place located as closely as possible to the teat.

15. An implement as claimed in claim 14, **characterized in that** the pulse milk flow sensor (8) is disposed in the teat cup (1).

16. An implement as claimed in claim 14, **characterized in that** the pulse milk flow sensor (8) is disposed in or on a part of a milk line (6) of the teat cup (1) that is closest to the teat cup (1).

17. An implement as claimed in any one of claims 10 - 16, **characterized in that** the implement comprises a milking robot for automatically connecting the teat cups (1) to the teats of an animal to be milked.

## Patentansprüche

1. Verfahren zum automatischen Melken von Tieren mit den folgenden Verfahrensschritten:
- wiederholtes oder ständiges Messen des momentanen Pulsiermilchstromes, wobei mit Pulsiermilchstrom der Milchfluss von der Zitze während einer einzelnen Ansaugphase des Melkvorgangs gemeint ist;
- Steuern der Dauer und/oder des Pegels des Melkvakuums unter der Zitze während der eigentlichen Ansaugphase auf der Basis der gemessenen Menge, wobei mit Ansaugphase die Zeit gemeint ist, während der die Zitze einem Vakuum während dem zuvor genannten Pulsiermilchstrom ausgesetzt ist,
**dadurch gekennzeichnet, daß** dieses Verfahren die folgenden Verfahrensschritte umfaßt:
- Während der eigentlichen Ansaugphase Speichern des bisher gemessenen Maximalwertes des Pulsiermilchstromes oder der zugehörigen Menge,
- Senken oder Reduzieren oder Abschalten des Vakuumpegels des Melkvakuums, sobald der momentane Wert des Pulsiermilchstromes oder der zugehörigen Menge einen bestimmten, vorzugsweise einstellbaren Grenzwert unterschritten hat, wobei der Grenzwert einen Wert zwischen 60 % und 80 % des bisher gemessenen Maximalwertes des Pulsiermilchstromes oder der zugehörigen Menge aufweist.

2. Verfahren nach Anspruch 1,
**dadurch gekennzeichnet, daß** dieses Verfahren die folgenden Verfahrensschritte umfaßt:
- Zusammendrücken der Auskleidung des Zitzenbechers, sobald der momentane Wert des Pulsiermilchstromes oder der zugehörigen Menge den bestimmten, vorzugsweise einstellbaren Grenzwert unterschritten hat.

3. Verfahren nach Anspruch 1,
**dadurch gekennzeichnet, daß** der Wert etwa 70 % beträgt.

4. Verfahren nach einem der vorhergehenden Ansprüche, **dadurch gekennzeichnet, daß** die Dauer der Ansaugphase auf einen Wert zwischen 0,8 und 2 Sekunden begrenzt ist und vorzugsweise etwa 1,4 Sekunden beträgt.

5. Verfahren nach einem der vorhergehenden Ansprüche, **dadurch gekennzeichnet, daß** die Zeit, während der die Zitze während des Melkens dem Vakuum kaum ausgesetzt ist, wenn dies überhaupt der Fall ist, d. h. die Entspannungsphase, zwischen 30 % und 40 % und vorzugsweise etwa 35 % der Dauer der Ansaugphase beträgt.

6. Verfahren nach Anspruch 5,
**dadurch gekennzeichnet, daß** die maximale Dauer der Entspannungsphase während des Hauptmelkvorganges zwischen 175 und 225 Millisekunden und vorzugsweise 200 Millisekunden beträgt.

7. Verfahren nach einem der vorhergehenden Ansprüche, **dadurch gekennzeichnet, daß** die maximale Dauer der Entspannungsphase während des Vormelkens zwischen 30 und 100 Millisekunden und vorzugsweise 40 Millisekunden beträgt.

8. Verfahren nach einem der vorhergehenden Ansprüche, **dadurch gekennzeichnet, daß** die maximale Dauer der Entspannungsphase während des Ausmelkens zwischen 225 und 800 Millisekunden und vorzugsweise 400 Millisekunden beträgt.

9. Verfahren nach einem der vorhergehenden Ansprüche, **dadurch gekennzeichnet, daß** das Verfahren bei jeder Zitze einzeln durchgeführt wird.

10. Vorrichtung zum automatischen Melken von Tieren, wobei die Vorrichtung mindestens einen einstellbaren Pulsator (5), mindestens einen Pulsiermilchstrom-Sensor (8), eine Vorrichtung zum wiederholten oder ständigen Messen des momentanen Pulsiermilchstromes, wobei mit Pulsiermilchstrom der Milchfluss von der Zitze während einer einzelnen Ansaugphase des Melkvorgangs gemeint ist, und eine Vorrichtung zum Steuern der Dauer und/oder des Pegels des Melkvakuums unter der Zitze während der eigentlichen Ansaugphase auf der Basis der gemessenen Menge, wobei mit Ansaugphase die Zeit gemeint ist, während der die Zitze einem Vakuum während dem zuvor genannten Pulsiermilchstrom augesetzt ist, umfaßt,
**dadurch gekennzeichnet, daß** die Vorrichtung ferner Vorrichtungen umfaßt, um während der eigentlichen Ansaugphase den bisher gemessenen Maximalwert des Pulsiermilchstromes oder der zugehörigen Menge zu speichern, sowie Vorrichtungen zum Senken oder Reduzieren oder Abschalten des Vakuumpegels des Melkvakuums, sobald der momentane Wert des Pulsiermilchstromes oder der zugehörigen Menge einen bestimmten, vorzugsweise einstellbaren Grenzwert unterschritten hat, wobei der Grenzwert einen Wert zwischen 60 % und 80 % des bisher gemessenen Maximalwertes des Pulsiermilchstromes oder der zugehörigen Menge aufweist.

11. Vorrichtung nach Anspruch 10,
**dadurch gekennzeichnet, daß** jeder der Zitzenbecher (1) der Vorrichtung zum automatischen Melken einen einstellbaren Pulsator (5) und einen Pulsiermilchstrom-Sensor (8) umfaßt.

12. Vorrichtung nach Anspruch 10 oder 11,
**dadurch gekennzeichnet, daß** der Pulsiermilchstrom-Sensor (8) einen Leitfähigkeitssensor umfaßt.

13. Vorrichtung nach Anspruch 10 oder 11,
**dadurch gekennzeichnet, daß** der Pulsiermilchstrom-Sensor (8) durch einen optischen und/oder akustischen Sensor gebildet ist.

14. Vorrichtung nach einem der Ansprüche 10 bis 13,
**dadurch gekennzeichnet, daß** der Pulsiermilchstrom-Sensor (8) in dem Zitzenbecher (1) oder in dem Milchleitungssystem (6) an einer Stelle angeordnet ist, die möglichst nahe an der Zitze liegt.

15. Vorrichtung nach Anspruch 14,
**dadurch gekennzeichnet, daß** der Pulsiermilchstrom-Sensor (8) in dem Zitzenbecher (1) angeordnet ist.

16. Vorrichtung nach Anspruch 14,
**dadurch gekennzeichnet, daß** der Pulsiermilchstrom-Sensor (8) in oder an einem Teil einer Milchleitung (6) des Zitzenbechers (1) angeordnet ist, der möglichst nahe am Zitzenbecher (1) liegt.

17. Vorrichtung nach einem der Ansprüche 10 bis 16,
**dadurch gekennzeichnet, daß** die Vorrichtung einen Melkroboter zum automatischen Anschließen der Zitzenbecher (1) an die Zitzen eines zu melkenden Tieres umfaßt.

## Revendications

1. Procédé de traite automatique d'animaux, comprenant les étapes suivantes consistant à :
- mesurer de manière répétée ou en continu le flux de lait pulsé momentané, le flux de lait pulsé signifiant le flux de lait d'un trayon au cours d'une phase d'aspiration unique du processus de traite ;
- contrôler la durée et/ou le niveau de vide de traite sous le trayon pendant la phase d'aspiration réelle sur la base de la quantité mesurée, la phase d'aspiration signifiant le temps pendant lequel le trayon est exposé à un vide au cours du flux de lait pulsé susmentionné, **caractérisé en ce que** ce procédé comprend les étapes de :
- stockage, pendant la phase d'aspiration réelle, de la valeur maximale du flux de lait pulsé mesurée jusqu'ici ou de la quantité associée,
- diminution ou réduction ou fermeture du niveau de vide du vide de traite dès que la valeur momentanée du flux de lait pulsé ou de la quantité associée passe sous une valeur seuil spécifique, de préférence ajustable, laquelle valeur seuil a une valeur comprise entre 60 % et 80 % de la valeur maximale du flux de lait pulsé mesurée jusqu'ici ou de la quantité associée.

2. Procédé selon la revendication 1, **caractérisé en ce que** ce procédé comprend l'étape suivante consistant à :
- serrer le manchon du gobelet trayeur dès que la valeur momentanée du flux de lait pulsé ou de la quantité associée passe sous la valeur seuil spécifique, de préférence ajustable.

3. Procédé selon la revendication 1, **caractérisé en ce que** la valeur est égale à environ 70 %.

4. Procédé selon l'une quelconque des revendications précédentes, **caractérisé en ce que** la durée de la phase d'aspiration est limitée à une valeur située entre 0,8 et 2 secondes et de préférence égale à environ 1,4 seconde.

5. Procédé selon l'une quelconque des revendications précédentes, **caractérisé en ce que** la durée au cours de laquelle le trayon n'est pratiquement pas, voire pas du tout, exposé, au vide pendant la traite, c'est-à-dire la phase de massage, est entre 30 % et 40 % et de préférence environ 35 % de la durée de la phase d'aspiration.

6. Procédé selon la revendication 5, **caractérisé en ce que** la durée maximale de la phase de massage pendant la phase de traite principale est de 175 à 225 millisecondes et de préférence 200 millisecondes.

7. Procédé selon l'une quelconque des revendications précédentes, **caractérisé en ce que** la durée maximale de la phase de massage pendant les premiers jets est de 30 à 100 millisecondes et de préférence 40 millisecondes.

8. Procédé selon l'une quelconque des revendications précédentes, **caractérisé en ce que** la durée maximale de la phase de massage pendant l'égouttage est de 225 à 800 millisecondes et de préférence 400 millisecondes.

9. Procédé selon l'une quelconque des revendications précédentes, **caractérisé en ce que** le procédé est appliqué à chaque trayon individuellement.

10. Dispositif de traite automatique d'animaux, ledit dispositif comprenant au moins un pulsateur ajustable (5), au moins un capteur du flux de lait pulsé (8), des moyens pour mesurer de manière répétée ou en continu le flux de lait pulsé momentané, le flux de lait pulsé signifiant le flux de lait d'un trayon au cours d'une phase d'aspiration unique du processus de traite, et des moyens pour contrôler la durée et/ou le niveau du vide de traite sous le trayon pendant la phase d'aspiration réelle sur la base de la quantité mesurée, la phase d'aspiration signifiant le temps pendant lequel le trayon est exposé à un vide au cours du flux de lait pulsé susmentionné, **caractérisé en ce que** le dispositif comprend en outre des moyens pour stocker, pendant la phase d'aspiration réelle, la valeur maximale du flux de lait pulsé mesurée jusqu'ici ou la quantité associée, et des moyens pour abaisser ou réduire ou fermer le niveau de vide du vide de traite dès que la valeur momentanée du flux de lait pulsé ou de la quantité associée passe sous une valeur seuil spécifique, de préférence ajustable, laquelle valeur seuil a une valeur comprise entre 60 % et 80 % de la valeur maximale du flux de lait pulsé mesurée jusqu'ici ou de la quantité associée.

11. Dispositif selon la revendication 10, **caractérisé en ce que** chacun des gobelets trayeurs (1) du dispositif de traite automatique comprend un pulsateur ajustable (5) et un capteur du flux de lait pulsé (8).

12. Dispositif selon la revendication 10 ou 11, **caractérisé en ce que** le capteur du flux de lait pulsé (8) comprend un capteur de conductivité.

13. Dispositif selon la revendication 10 ou 11, **caractérisé en ce que** le capteur du flux de lait pulsé (8) est constitué d'un capteur optique et/ou acoustique.

14. Dispositif selon l'une quelconque des revendications 10 à 13, **caractérisé en ce que** le capteur du flux de lait pulsé (8) est placé dans le gobelet trayeur (1) ou dans le système à lactoduc (6) à un point situé le plus près possible du trayon.

15. Dispositif selon la revendication 14, **caractérisé en ce que** le capteur du flux de lait pulsé (8) est placé dans le gobelet trayeur (1).

16. Dispositif selon la revendication 14, **caractérisé en ce que** le capteur du flux de lait pulsé (8) est placé dans ou sur un élément d'un lactoduc (6) du gobelet trayeur (1) à un point situé le plus près possible du gobelet trayeur (1).

17. Dispositif selon l'une quelconque des revendications 10 à 16, **caractérisé en ce que** le dispositif comprend un robot de traite pour poser automatiquement les gobelets trayeurs (1) sur les trayons des animaux à traire.
